(19) Europäisches Patentamt
European Patent Office
Office européen des brevets

(11) **EP 4 617 949 A1**

(12) **EUROPEAN PATENT APPLICATION**

(43) Date of publication:
**17.09.2025  Bulletin 2025/38**

(21) Application number: **25162610.7**

(22) Date of filing: **10.03.2025**

(51) International Patent Classification (IPC):
**G06N 3/0442** (2023.01)      **G06N 3/045** (2023.01)
**G06N 3/092** (2023.01)

(52) Cooperative Patent Classification (CPC):
**G06N 3/092; G06N 3/0442; G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.03.2024  KR 20240033850**

(71) Applicant: **LG Management Development Institute**
**Seoul 07336 (KR)**

(72) Inventors:
• **HONG, Sunghoon**
  **08000 Seoul (KR)**

• **YOON, Deunsol**
  **06587 Seoul (KR)**
• **JUNG, Whiyoung**
  **05652 Seoul (KR)**
• **LEE, Kanghoon**
  **03504 Seoul (KR)**
• **LIM, Woohyung**
  **06004 Seoul (KR)**

(74) Representative: **BCKIP Part mbB**
**MK1**
**Landsbergerstraße 98, 3.Stock**
**80339 München (DE)**

(54) **SYSTEM, METHOD AND APPARATUS FOR MULTI-AGENT REINFORCEMENT LEARNING**

(57)    A system for multi-agent reinforcement learning includes a multi-agent including a first agent and a second agent, a history encoder including a first history encoder corresponding to the first agent and a second history encoder corresponding to the second agent, a memory configured to store one or more commands, and at least one processor configured to execute the one or more commands stored in the memory, wherein, the at least one processor, by executing the one or more commands, is configured to i) generate first history information of the first agent by inputting observation data of the first agent into the first history encoder and ii) generate second history information of the second agent by inputting observation data of the second agent into the second history encoder.

FIG. 3

**Description**

CROSS REFERENCE TO RELATED APPLICATION

The application claims priority from and the benefit of Korean Patent Application No. 10-2024-0033850, filed on March 11, 2024.

BACKGROUND

FIELD

Embodiments of the invention relate generally to a system, method, and apparatus for performing multi-agent reinforcement learning, and more specifically, to a method and apparatus for deriving an optimized result using reinforcement learning.

DISCUSSION OF THE BACKGROUND

In recent years, reinforcement learning has been performed in a single-agent environment of a static task. However, many problems in reality appear as multi-agent problems, and in most situations, agents each need to make independent decisions based on incomplete observations while considering other agents in order to maximize overall or individual rewards. Multi-agent reinforcement learning is a framework that can solve these problems, and can be learned to find an effective policy.

These multi-agents perform actions asynchronously with each other, and accordingly, extensive research has been conducted on considering asynchronous actions.

The above information disclosed in this Background section is only for understanding of the background of the inventive concepts, and, therefore, it may contain information that does not constitute prior art.

SUMMARY

Applicant recognized that the asynchronous multi-agent reinforcement learning has been studied based on a deep Q-network, but deep Q-network-based methods cannot perform centralized learning and distributed execution due to structural limitations. Accordingly, there is a need for research on methods for more efficient asynchronous multi-agent reinforcement learning.

Systems, methods, and apparatus for performing multi-agent reinforcement learning according to embodiments of the invention are capable of overcoming these problems by deriving an optimized result using reinforcement learning.

Additional features of the inventive concepts will be set forth in the description which follows, and in part will be apparent from the description, or may be learned by practice of the inventive concepts.

According to one or more embodiments of the invention, a system for multi-agent reinforcement learning includes a multi-agent including a first agent and a second agent, a history encoder including a first history encoder corresponding to the first agent and a second history encoder corresponding to the second agent, a memory configured to store one or more commands, and at least one processor configured to execute the one or more commands stored in the memory, wherein, the at least one processor, by executing the one or more commands, is configured to i) generate first history information of the first agent by inputting observation data of the first agent into the first history encoder and ii) generate second history information of the second agent by inputting observation data of the second agent into the second history encoder.

The first history encoder may include time information related to observation data of the first agent for performing encoding.

Each history encoder provided for each agent of the multi-agent may include a multi-layer perceptron (MLP) and a gated recurrent unit (GRU).

The system may further include an aggregation module configured to receive and process one or more pieces of history information corresponding to an output of the history encoder.

An output value of the aggregation module may be processed by a multi-layer perceptron (MLP).

A method for multi-agent reinforcement learning includes a first agent and a second agent, with the method being performed by at least one processor. The method may include inputting observation data of the first agent into a first history encoder to generate first history information of the first agent, and inputting observation data of the second agent into a second history encoder to generate second history information of the second agent, wherein the history encoders including the first history encoder and the second history encoder may be each provided for each agent of a multi-agent.

The first history encoder may include time information related to observation data of the first agent in order to perform encoding.

Each history encoder provided for each agent of the multi-agent may include a multi-layer perceptron (MLP) and a gated recurrent unit (GRU).

The method may include processing, by an aggregation module, one or more pieces of history information corresponding to an output of the history encoder provided for each agent of the multi-agent.

The method may further include processing, by a multi-layer perceptron (MLP), an output value of the aggregation module.

One or more non-transitory computer-readable storage medium encoded with commands may be provided that cause one or more computers to perform operations when executed by the one or more computers, wherein the operations may include inputting observation data of a first agent into a first history encoder to generate first history information of the first agent, and inputting observation data of a second agent into a second history encoder to generate second history information of the second agent, and the history encoders including the first history encoder and the second history encoder may be each provided for each agent of a multi-agent.

The first history encoder may include time information related to observation data of the first agent in the observation data of the first agent in order to perform encoding.

Each history encoder provided for each agent of the multi-agent may include a multi-layer perceptron (MLP) and a gated recurrent unit (GRU).

The operations may further include processing, by an aggregation module, one or more pieces of history information corresponding to an output of the history encoder provided for each agent of the multi-agent.

The operations may further include processing, by a multi-layer perceptron (MLP), an output value of the aggregation module.

A program stored in a recording medium may be provided to execute the method according to one embodiment of the present invention on a computer.

A computer-readable recording medium is provided in which a program executes the disclosed method on a computer.

A computer-readable recording medium is provided in which a database of the present invention is recorded.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the inventive concepts.

FIG. 1 is a diagram, including tables, for describing training buffers in a macro-action decentralized partially observable markov decision process (MacDec-POMDP) according to one embodiment of the invention.
FIG. 2 is a diagram, including tables, showing a centralized critic using joint history encoders according to one embodiment of the invention.
FIG. 3 is a diagram, including tables, which shows a agent-oriented centralized critic according to one embodiment of the invention.
FIG. 4 is a diagram showing a reinforcement learning system according to one embodiment of the invention.

DETAILED DESCRIPTION

In the following description, for the purposes of explanation, numerous specific details are set forth in order to provide a thorough understanding of various embodiments or implementations of the invention. As used herein "embodiments" and "implementations" are interchangeable words that are non-limiting examples of devices or methods employing one or more of the inventive concepts disclosed herein. It is apparent, however, that various embodiments may be practiced without these specific details or with one or more equivalent arrangements. In other instances, well-known structures and devices are shown in block diagram form in order to avoid unnecessarily obscuring various embodiments. Further, various embodiments may be different, but do not have to be exclusive. For example, specific shapes, configurations, and characteristics of an embodiment may be used or implemented in another embodiment without departing from the inventive concepts.

Unless otherwise specified, the illustrated embodiments are to be understood as providing features of varying detail of some ways in which the inventive concepts may be implemented in practice. Therefore, unless otherwise specified, the features, components, modules, layers, films, panels, regions, and/or aspects, etc. (hereinafter individually or collectively referred to as "elements"), of the various embodiments may be otherwise combined, separated, interchanged, and/or rearranged without departing from the inventive concepts.

The use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified. Further, in the accompanying drawings, the size and relative sizes of elements may be exaggerated for clarity and/or descriptive purposes. When an embodiment may be implemented differently, a specific process order may be performed differently from the described order. For example, two consecutively described processes may be performed substantially at the same time or performed in an order opposite to the described order. Also, like reference numerals denote like elements.

Although the terms "first," "second," etc. may be used herein to describe various types of elements, these elements should not be limited by these terms. These terms are used to distinguish one element from another element. Thus, a first element discussed below could be termed a second element without departing from the teachings of the invention.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. It is also noted that, as used herein, the terms "substantially," "about," and other similar terms, are used as terms of approximation and not as terms of degree, and, as such, are utilized to account for inherent deviations in measured, calculated, and/or provided values that would be recognized by one of ordinary skill in the art.

Various embodiments are described herein with reference to sectional and/or exploded illustrations that are schematic illustrations of idealized embodiments and/or intermediate structures. As such, variations from the shapes of the illustrations as a result, for example, of manufacturing techniques and/or tolerances, are to be expected. Thus, embodiments disclosed herein should not necessarily be construed as limited to the particular illustrated shapes of regions, but are to include deviations in shapes that result from, for instance, manufacturing. In this manner, regions illustrated in the drawings may be schematic in nature and the shapes of these regions may not reflect actual shapes of regions of a device and, as such, are not necessarily intended to be limiting.

As customary in the field, some embodiments are described and illustrated in the accompanying drawings in terms of functional blocks, units, and/or modules. Those skilled in the art will appreciate that these blocks, units, and/or modules are physically implemented by electronic (or optical) circuits, such as logic circuits, discrete components, microprocessors, hard-wired circuits, memory elements, wiring connections, and the like, which may be formed using semiconductor-based fabrication techniques or other manufacturing technologies. In the case of the blocks, units, and/or modules being implemented by microprocessors or other similar hardware, they may be programmed and controlled using software (e.g., microcode) to perform various functions discussed herein and may optionally be driven by firmware and/or software. It is also contemplated that each block, unit, and/or module may be implemented by dedicated hardware, or as a combination of dedicated hardware to perform some functions and a processor (e.g., one or more programmed microprocessors and associated circuitry) to perform other functions. Also, each block, unit, and/or module of some embodiments may be physically separated into two or more interacting and discrete blocks, units, and/or modules without departing from the scope of the inventive concepts. Further, the blocks, units, and/or modules of some embodiments may be physically combined into more complex blocks, units, and/or modules without departing from the scope of the inventive concepts.

The expression "configured to (or set to)" as used throughout the present disclosure may, depending on the contexts, be used interchangeably with, for example, "suitable for," "having the capacity to," "designed to," "adapted to," "made to," or "capable of." The term "configured to (or set to)" does not necessarily mean only "specifically designed to" in hardware. Instead, in certain contexts, the expression "a system configured to" may mean that the system is "capable of" something along with other devices or parts. For example, the phrase "a processor configured to (or set to) perform A, B, and C" may mean a dedicated processor (e.g., an embedded processor) for performing corresponding operations, or a general-purpose processor (e.g., a CPU or application processor) that can perform corresponding operations by executing one or more software programs stored in memory. In addition, when a certain portion is described as "including" a certain component, it means further including another component rather than precluding another component unless specifically stated otherwise.

Unless otherwise defined, all terms (including technical and scientific terms) used herein have the same meaning as commonly understood by one of ordinary skill in the art to which this invention is a part. Terms, such as those defined in commonly used dictionaries, should be interpreted as having a meaning that is consistent with their meaning in the context of the relevant art and should not be interpreted in an idealized or overly formal sense, unless expressly so defined herein.

A reinforcement learning system according to one embodiment receives observations characterized by a current state of an environment and selects actions to be performed by an agent using those observations. In response to the agent performing the selected action, the environment is transduced to a new state, and the reinforcement learning system receives a reward. This reward may be a numerical value that is a function of an environment state. During interaction with the environment, the reinforcement learning system may attempt to maximize the long-term reward received by the agent in response to the actions performed by the agent.

A macro-action decentralized partially observable markov decision process (MacDec-POMDP) may define a set of macro-actions for each agent and integrate an option framework into a Dec-POMDP. In one embodiment, the MacDec-POMDP may be represented by a tuple $\langle \mathcal{I}, \mathcal{S}, \tilde{\mathcal{A}}, \tilde{\mathcal{M}}, \tilde{\Omega}, \tilde{\zeta}, T, R, \tilde{O}, \tilde{Z} \rangle$. Here, $\mathcal{I}$ = {1, ..., N} is a set of identifiers of agents, $\mathcal{S}$ is a state space, $\tilde{\mathcal{A}} = \prod_{i \in \mathcal{I}} \mathcal{A}^i$ is a combined primitive action space, $\tilde{\mathcal{M}} = \prod_{i \in \mathcal{I}} \mathcal{M}^i$ is a combined macro-action space, $\tilde{\Omega} = \prod_{i \in \mathcal{I}} \Omega^i$ is a combined primitive observation space, $\tilde{\zeta} = \prod_{i \in \mathcal{I}} \zeta^i$ is a combined macro-observation space, $T(s'|s, \tilde{a})$ is a state change probability, R is a reward shared by all agents, $\tilde{O}(\tilde{o}|s', \tilde{a})$, $\tilde{o} \in \tilde{\Omega}$ is a combined observation probability, and $\tilde{Z}(\tilde{z}|s', \tilde{m})$, $\tilde{z} \in \tilde{\zeta}$ is a combined macro-observation probability. Throughout the present disclosure, $\square^i$ denotes an element or space of an agent i, $(\tilde{\square})$ denotes a combination or product of $\square^i$ for all agents. Each macro-action may be a tuple $m^i = \langle \beta_{m^i}, \mathcal{I}_{m^i}, \pi_{m^i} \rangle \in \mathcal{M}^i$ composed of a termination condition $\beta_{m^i} : \mathcal{H}^i_{\text{pri}} \to [0, 1]$, an initial set $\mathcal{I}_{m^i} \subset \mathcal{H}^i_{\text{mac}}$, and a lower-level policy $\pi_{m^i} : \mathcal{H}^i_{\text{pri}} \to \mathcal{A}^i$. Here, $\mathcal{H}^i_{\text{pri}}$ (or $\mathcal{H}^i_{\text{mac}}$) is a primitive (or macro) action observation history space.

In one embodiment, the goal of the MacDec-POMDP may be to find a joint upper-level policy $\tilde{\Psi} = \prod_{i \in \mathcal{I}} \Psi^i$ that maximizes a profit that is predicted from an initial state $s_0$ for given lower-level policies (e.g., macro-actions). For example, the joint upper-level policy may be determined by the following [Equation 1].

[Equation 1]

$$\tilde{\Psi}^* = \arg\max_{\tilde{\Psi}} \mathbb{E}\left[ \sum_{t=0}^{\infty} \gamma^t R(s_t, \tilde{a}_t) \mid s_0, \tilde{\Psi} \right]$$

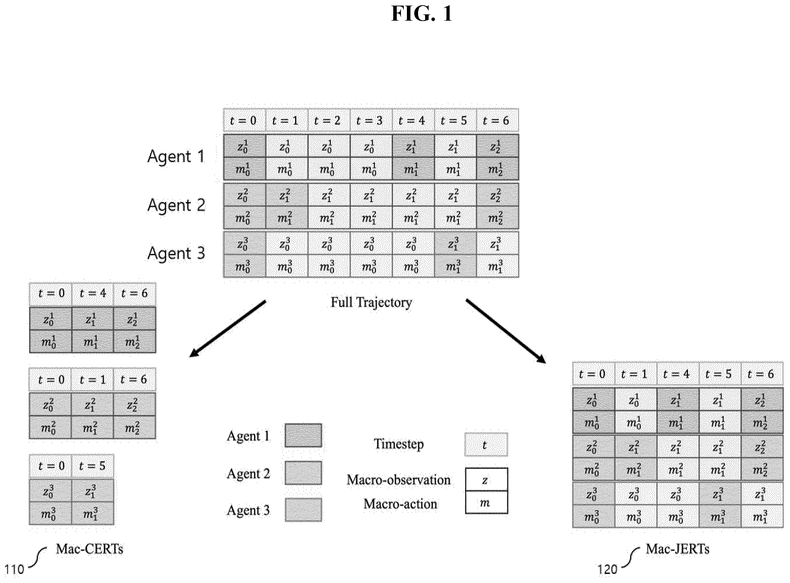

FIG. 1 is a diagram, including tables, for describing training buffers in the MacDec-POMDP according to one embodiment of the invention.

Referring to FIG. 1, training buffers of macro-action concurrent experience replay trajectories (Mac-CERTs) 110 and training buffers of macro-action joint experience replay trajectories (Mac-JERTs) 120 are shown. In FIG. 1, $z^i$ and $m^i$ denote macro-observation and macro-action of an agent i, respectively.

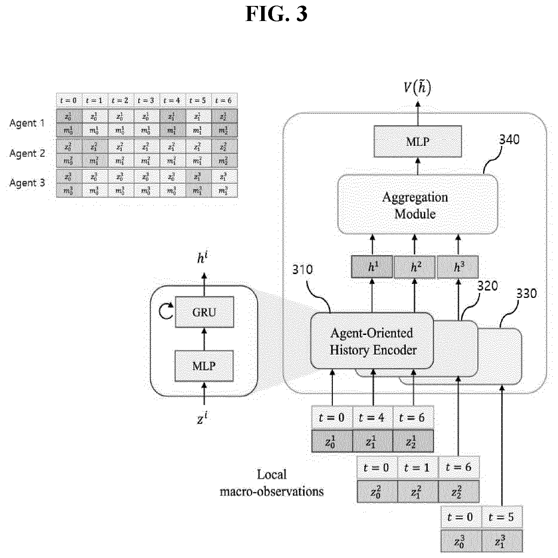

Referring to the example of FIG. 1, a multi-agent may include a first agent (Agent 1 in FIG 1), a second agent (Agent 2 in FIG 1), and a third agent (Agent 3 in FIG 3). The first agent (Agent 1) may act at timesteps 4 and 6, the second agent (Agent 2) may act at timesteps 1 and 6, and the third agent (Agent 3) may act at timestep 5, thereby causing state transitions. In one embodiment, the Mac-CERTs 110 may collect timestep time points at which state transitions occur in each agent and generate training buffers. Accordingly, as shown in FIG. 1, buffers containing information of time points of t = 0, 4, 6 may be generated in Agent 1, buffers containing information of time points of t = 0, 1, 6 may be generated in Agent 2, and buffers containing information of time points of t = 0, 5 may be generated in Agent 3. Alternatively, the Mac-JERTs 120 may collect timestep time points at which state transitions occur in one of the agents and generate training buffers.

Accordingly, buffers containing information of time points of t = 0, 1, 4, 5, 6 may be generated. Hereinafter, this will be described in more detail.

In the Mac-CERTs according to one embodiment, the state transition experience of each agent i may be represented by a tuple $\langle z^i, m^i, z^{i\prime}, r^i \rangle$. Here, r' denotes an accumulated reward for a macro-action $m^i$ that starts at timestep $t^i$ and lasts during timestep $\tau^i$. Accordingly, $r^i$ may be defined as the following [Equation 2].

[Equation 2]

$$r^i = \sum_{t=t^i}^{t^i + \tau^i - 1} \gamma^{t - t^i} r_t$$

In the Mac-JERTs according to one embodiment, the state transition experience may be represented by a tuple $\langle \tilde{z}, \tilde{m}, \tilde{z}\prime, \tilde{r} \rangle$. Here, $\tilde{r}$ denotes an accumulated reward of the joint macro-action $\tilde{m}$, which may be

$$\tilde{r} = \sum_{t=\tilde{t}}^{\tilde{t} + \tilde{\tau} - 1} \gamma^{t - \tilde{t}} r_t$$

. Unlike the Mac-CERTs, in the Mac-JERTs, $\tilde{t}$ denotes a timestep when a certain agent performs the corresponding macro-action, and $\tilde{t} + \tilde{\tau} - 1$ denotes a termination timestep when the corresponding agent terminates the macro-action. In the example of FIG. 1, Agent 2 starts action at timestep 1, and a joint macro-action

$$[m_0^1, m_1^2, m_0^3]$$

may be generated, and the first agent (Agent 1) starts the subsequent macro-action at

$$[m_1^1, m_1^2, m_0^3]$$

timestep 4, and the subsequent joint macro-action　　　　　　　　may be generated.

Such multi-agent reinforcement learning is actively being developed and applied in various fields. By using the multi-agent reinforcement learning, distributed agents can complete assigned tasks through effective collaboration. The currently used multi-agent reinforcement learning adapts a method in which all agents simultaneously determine their actions due to the same duration between actions. However, in real-world scenarios, there are many cases in which the agents determine and perform actions at different times, thereby causing the agents to asynchronously determine and perform actions. One embodiment of the present invention provides a framework for modeling multi-agent decision-making in which the agents asynchronously determine and perform actions over time using the MacDec-POMDP. In one embodiment, in the MacDec-POMDP, the time at which action of each agent starts and the duration of the action may differ from each other.

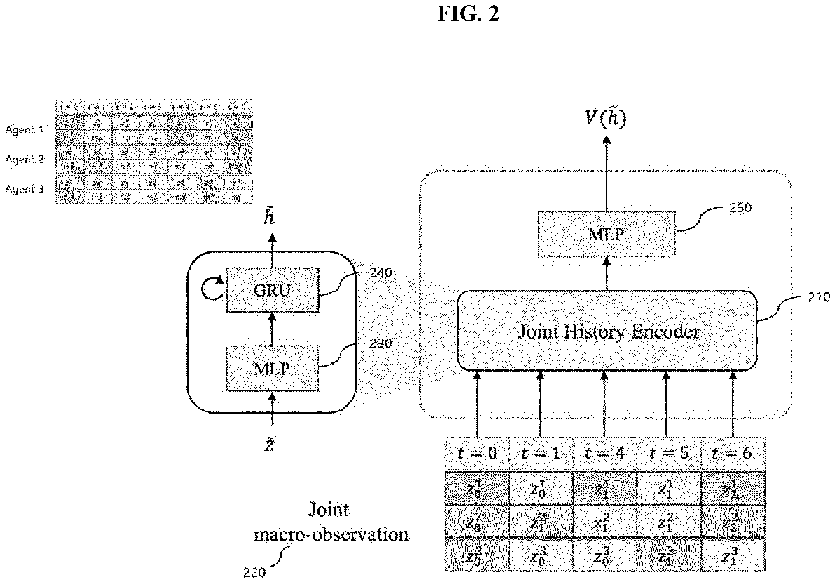

FIG. 2 is a diagram showing a centralized critic using joint history encoders according to one embodiment of the present invention.

Referring to FIG. 2, a joint history encoder 210 focusing on a common history of all agents along a time axis is shown. In one embodiment, training data 220 input to the joint history encoder 210 is joint macro-observation data and may be generated by collecting observations of timesteps at which state transitions occur in any one of the agents. For example, when $z_k^i$ denotes the $k^{th}$ macro-observation of the agent i, since the first agent (Agent 1) has state transitions at timesteps t=4, 6, the second agent (Agent 2) has state transitions at time steps t=2, 6, and the third agent (Agent 3) has state transitions at timestep t=5, so that the training data 220 may be generated so as to include timesteps t=1, 4, 5, 6 at which state transitions occur in anyone of Agents 1, 2, and 1 3. Accordingly, the training data 220 may include the observation $z_0^1$ of the first agent (Agent 1), the observation $z_0^2$ of the second agent (Agent 2), and the observation $z_0^3$ of the third agent (Agent 3) at t=0; at t=1, include the same observation $z_0^1$ as that at t=0 because the first agent (Agent 1) has no state transition, the observation $z_1^2$ of the second agent (Agent 2), and the same observation $z_0^3$ as

that at t=0 because the third agent (Agent 3) also has no state transition; at t=4, include the observation $z_1^1$ of the first agent (Agent 1), the same observation $z_1^2$ as that at t=1 because the second agent (Agent 2) has no state transition, and the same observation $z_0^3$ as that at t=0 or 1 because the third agent (Agent 3) also has no state transition; at t=5, include the same observation $z_1^1$ as that at t=4 because the first agent (Agent 1) has no state transition, the same observation $z_1^2$ as that at t=1 or 4 because the second agent (Agent 2) has no state transition, and the observation $z_1^3$ of the third agent (Agent 3); and at t=6, include the observation $z_2^1$ of the first agent (Agent 1), the observation $z_2^2$ of the second agent (Agent 2), and the same observation $z_1^3$ as that at t=5 because the third agent (Agent 3) has no state transition. The training data 220 may be input into the joint history encoder 210.

In one embodiment, the joint history encoder 210 may include a first multi-layer perceptron (MLP) 230 and a gated recurrent unit (GRU) 240. The first MLP 230 may include an input layer, one or more hidden layers, and an output layer. The first MLP 230 may determine z output information by inputting the training data 220 , and the output information of the first MLP 230 may be input into the GRU 240. The GRU 240 is a model used to process sequential data and may be operated using a reset gate and an update gate. The reset gate may determine the degree at which the previous state needs to be forgotten, and the update gate may determine the degree at which information of the previous state needs to be fetched. The output information of the GRU 240 may be input into a second MLP 250.

The centralized critic that focuses on combining the histories of all agents along the time axis may use a joint history encoder to abstract joint macro-observations. However, consecutive joint macro-observations may include duplicate observation data at timesteps at which one agent starts to perform a macro-action and other agents do not perform actions, and accordingly, the duplicate observations may have a risk of deriving inaccurate inferences. For example, at t=5 of FIG. 2, even though state transitions occur in only Agent 3, duplicate observation data for Agents 1 and 2 are included, and such duplicate observation data may lead to inappropriate inference results.

In one embodiment, in the example of FIG. 2 of the MacDec-PDMDP, the joint macro-observation history abstracted by the joint history encoder at timestep t=6 may be represented by the following [Equation 3].

[Equation 3]

$$\tilde{h} = \text{Enc}\left(\tilde{z}_0, \tilde{z}_1, \tilde{z}_2, \tilde{z}_3, \tilde{z}_4\right)$$

$$= \text{Enc}\left(\begin{bmatrix} z_0^1 \\ z_0^2 \\ z_0^3 \end{bmatrix}, \begin{bmatrix} z_0^1 \\ z_1^2 \\ z_0^3 \end{bmatrix}, \begin{bmatrix} z_1^1 \\ z_1^2 \\ z_0^3 \end{bmatrix}, \begin{bmatrix} z_1^1 \\ z_1^2 \\ z_1^3 \end{bmatrix}, \begin{bmatrix} z_2^1 \\ z_2^2 \\ z_1^3 \end{bmatrix}\right)$$

As above, since the joint history encoder uses the same macro-observation multiple times (e.g., $z_1^2$ is used three times), it may interfere with accurately determining local histories of all agents and inference between the agents.

Therefore, since a common centralized critic structure for multi-agent reinforcement learning focuses on common histories along the time axis, duplicate macro-observation for agents capable of non-macro action may be introduced at timestep at which one agent starts to perform a macro-action and other agents cannot perform actions in the centralized critique. However, such duplicate macro-observations may provide inaccurate evaluations for the centralized critic. In order to resolve the limitations of this approach and enable efficient asynchronous learning, there is a need for a specialized architecture that can effectively collect histories of individual agent and facilitate inference between the agents. To this end, one embodiment of the present invention provides an agent-oriented centralized critic. This will be described in more detail below with reference to FIG. 3.

FIG. 3 is a diagram showing a agent-oriented centralized critic according to one embodiment of the present invention.

Referring to FIG. 3, the agent-oriented centralized critic (AOCC) method for the MacDec-POMDP is shown. In one embodiment, an agent-oriented reinforcement learning structure may include agent-oriented history encoders 310, 320, and 330 provided for each agent that performs positional encoding and an aggregation module 340 for integrating histories of all agents. The agent-oriented history encoders 310, 320, and 330 provided for each agent may receive the latest local macro-observation of the corresponding agent as an input and output the local macro-observation history. Since such agent-oriented history encoder is not the centralized encoder illustrated in FIG. 2, the agent-oriented history encoder may not duplicatedly use the same observations. According to one embodiment, the agent-oriented history encoder can accurately capture the local history by focusing only on determining the history of the corresponding agent.

In one embodiment, a GRU may be used for the agent-oriented history encoder without sharing parameters between agents. That is, a first agent-oriented history encoder 310 corresponding to a first agent may include a first GRU, a second agent-oriented history encoder 320 corresponding to a second agent may include a second GRU, and a third agent-oriented history encoder 330 corresponding to a third agent may include a third GRU.

In one embodiment, the history of the agent i may be represented by the following [Equation 4].

[Equation 4]

$$ h^i := \mathrm{Enc}^i \left( z_0^i, \ldots, z_k^i \right) $$

Here, Enc' denotes the agent-oriented history encoder of the agent i, and $z_k^i$ denotes the latest local macro-observation of the agent i.

**In** one embodiment, since the agent-oriented history encoder encodes only the local macro-observation of each agent rather than the joint observation, the agent-oriented history encoder may break a temporal alignment between the agents. In one embodiment of the present invention, in order to consider the temporal order, sinusoidal positional encoding may be performed to introduce a time marker for the macro-observation of each agent. The timestep of the local macro-observation is encoded with a positional encoding vector $p^i$, and the temporal order may also be considered by concatenating the encoded result with the local macro-observation z'. Accordingly, the history for the agent i may be represented by the following [Equation 5].

[Equation 5]

$$ h^i := \mathrm{Enc}^i \left( [z_0^i, p_0^i], \ldots, [z_k^i, p_k^i] \right) $$

In one embodiment, the positional encoding may consider the temporal order and duration of macro-actions of all agents.

In one embodiment, the agent-oriented histories derived from the agent-oriented history encoder may be further processed by the aggregation module to approximate a value function. The aggregation module may include attention networks, an MLP followed by concatenation, a summation unit, etc. Alternatively, for simplification, only concatenation with MLP layers may be performed.

In one embodiment, the input of the aggregation module is a concatenation of the latest local histories, which may be represented by the following [Equation 6].

[Equation 6]

$$\tilde{h} := \left[ h^1, \ldots, h^N \right]$$

The subsequent MLP layers may transduce the joint history into their own values $V(\tilde{h})$.

According to one embodiment of the present invention, the efficient central critique learning may be achieved in an asynchronous setting by independently encoding the observation history and time information of each agent through the positional encoding and then integrating the encoded observation histories and pieces of time information. That is, the observation history of each agent may be encoded as information of timestep at which each agent starts to perform a macro-action, and the time information may also be encoded separately to be explicitly associated to learn the agent-oriented critic.

In addition, according to one embodiment of the present invention, the reinforcement learning to derive more accurate results by deleting duplicate macro-observations can be performed.

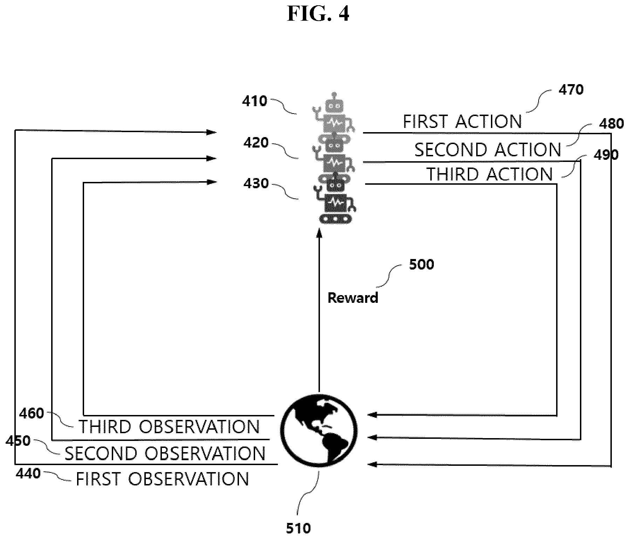

FIG. 4 is a diagram showing a reinforcement learning system according to one embodiment of the present invention.

Referring to FIG. 4, as an example of a system for multi-agent reinforcement learning, a reinforcement learning system performed by three agents, a first agent 410, a second agent 420, and a third agent 430 is shown. However, it is only an example, and unlike FIG. 3, reinforcement learning may be performed by two agents, and it is apparent that the reinforcement learning may be performed by more than three agents. For convenience of explanation, the case in which the reinforcement learning is performed by three agents will be described as an example.

In one embodiment, an environment 510 may be changed by a first action 470 determined by the first agent 410, a second action 480 determined by the second agent 420, and a third action 490 determined by the third agent 430. Accordingly, the first agent 410 may obtain a first observation 440 according to the environmental change, the second agent 420 may obtain a second observation 450 according to the environmental change, and the third agent 430 may obtain a third observation 460 according to the environmental change.

In one embodiment, the system for the multi-agent reinforcement learning may include a memory for storing one or more commands and at least one processor for executing the one or more commands stored in the memory. By executing the one or more commands, the at least one processor may input observation data corresponding to the first observation 440 of the first agent 410 into a first history encoder for the reinforcement learning to generate first history information for the first agent 410. In addition, the at least one processor may input observation data corresponding to the second observation 450 of the second agent 420 into a second history encoder to generate second history information for the second agent 420. In addition, the at least one processor may input observation data corresponding to the third observation 460 of the third agent 430 into a third history encoder to generate third history information for the third agent 430. Each of these history encoders may be provided for each agent of a multi-agent. That is, when there are n agents, n history encoders may be provided.

In one embodiment, each of the first history encoder, the second history encoder, and the third history encoder may include observation data of the corresponding agent and time information related to the corresponding observation to perform encoding. When the time information is not included, since the history encoder is separately provided for each agent, the state transition time is not reflected, thereby generating inaccurate information, but according to one embodiment of the present invention, accurate training can be implemented by matching the time information to the observation data of each agent and encoding the matched result. In addition, each of the first history encoder, the second history encoder, and the third history encoder may include an MLP and a GRU.

In one embodiment, the system for the multi-agent reinforcement learning may include an aggregation module for receiving and processing one or more history information corresponding to an output of the history encoder provided for each agent of the multi-agent. That is, a single aggregation module for processing multiple pieces of history information may be provided. In addition, an output value of the aggregation module may be processed by the MLP.

In one embodiment, a reward 500 may be determined by the environment 510 being changed depending on the first action 470 determined by the first agent 410, the second action 480 determined by the second agent 420, and the third action 490 determined by the third agent 430. The agents may cooperate with each other to maximize a value of the reward.

One embodiment of the present invention may be implemented in the form of a recording medium including computer-executable commands, such as program modules executed by a computer. A computer-readable medium may be any available medium that can be accessed by the computer, and may include all of volatile and non-volatile media, and removable and non-removable media. In addition, the computer-readable medium may include both a computer storage medium and a communication medium. The computer storage medium may include all of volatile and non-volatile, removable and non-removable media that are implemented in any method or technology for storing information such as computer-readable commands, data structures, program modules, or other data. The communication medium typically includes computer-readable commands, data structures, or program modules and includes any information transmission medium.

It will be appreciated that the disclosed invention may provide for more efficient and accurate training of reinforcement learning.

The above description of the present invention is for illustrative purposes, and those skilled in the art to which the present invention pertains will understand that various modifications can be easily made into other specific forms without departing from the technical spirit or essential characteristics of the present invention. Therefore, it should be understood that the above-described embodiments are illustrative and not restrictive in all aspects. For example, each component described in a singular form may be implemented separately, and likewise, components described as being implemented separately may also be implemented in a combined form.

The scope of the present invention is defined by the appended claims rather than the above detailed description, and all changes or modifications derived from the meaning and scope of the claims and their equivalent concepts should be construed as being included within the scope of the present invention.

Although certain embodiments and implementations have been described herein, other embodiments and modifications will be apparent from this description. Accordingly, the inventive concepts are not limited to such embodiments, but rather to the broader scope of the appended claims and various obvious modifications and equivalent arrangements as would be apparent to a person of ordinary skill in the art.

**Claims**

1. A system for multi-agent reinforcement learning, comprising:

   a multi-agent comprising a first agent and a second agent;
   a history encoder comprising a first history encoder corresponding to the first agent and a second history encoder corresponding to the second agent;
   a memory configured to store one or more commands; and
   at least one processor configured to execute the one or more commands stored in the memory,
   wherein the at least one processor, by executing the one or more commands, is configured to:

   generate first history information of the first agent by inputting observation data of the first agent into the first history encoder and
   generate second history information of the second agent by inputting observation data of the second agent into the second history encoder.

2. The system of claim 1, wherein the first history encoder includes time information related to observation data of the first agent in the observation data of the first agent for performing encoding.

3. The system of claim 1, wherein each history encoder for each agent of the multi-agent comprises a multi-layer perceptron (MLP) and a gated recurrent unit (GRU).

4. The system of claim 1, further comprising an aggregation module configured to receive and process one or more pieces of history information corresponding to an output of the history encoder.

5. The system of claim 4, wherein an output value of the aggregation module is processed by a multi-layer perceptron (MLP).

6. A method for multi-agent reinforcement learning including a first agent and a second agent, which is performed by at least one processor, the method comprising the steps of:

   Inputting, by the at least one processor, observation data of the first agent into a first history encoder to generate first history information of the first agent; and
   inputting, by the at least one processor, observation data of the second agent into a second history encoder to generate second history information of the second agent,

wherein the first history encoder and the second history encoder are each provided for each agent of a multi-agent.

7. The method of claim 6, wherein the first history encoder includes time information related to observation data of the first agent in the observation data of the first agent to perform encoding.

8. The method of claim 6, wherein each of the first history encoder and the second history encoder includes a multi-layer perceptron (MLP) and a gated recurrent unit (GRU).

9. The method of claim 6, further comprising a step of: processing, by an aggregation module, one or more pieces of history information corresponding to an output of the first and second history encoders.

10. The method of claim 9, further comprising a step of: processing, by a multi-layer perceptron (MLP), an output value of the aggregation module.

11. One or more non-transitory computer-readable storage medium encoded with commands that cause one or more computers to perform operations when executed by the one or more computers, wherein the operations comprise the steps of:

inputting observation data of a first agent into a first history encoder to generate first history information of the first agent; and

inputting observation data of a second agent into a second history encoder to generate second history information of the second agent,

wherein the first history encoder and the second history encoder are each provided for each agent of a multi-agent.

12. The one or more non-transitory computer-readable storage medium of claim 11, wherein the first history encoder includes time information related to observation data of the first agent in the observation data of the first agent to perform encoding.

13. The one or more non-transitory computer-readable storage medium of claim 11, wherein the first and second history encoders each include a multi-layer perceptron (MLP) and a gated recurrent unit (GRU).

14. The one or more non-transitory computer-readable storage medium of claim 11, wherein the operations further comprise a step of processing, by an aggregation module, one or more pieces of history information corresponding to an output of the first and second history encoders.

15. The one or more non-transitory computer-readable storage medium of claim 14, wherein the operations further comprise a step of processing, by a multi-layer perceptron (MLP), an output value of the aggregation module.

# FIG. 1

**Full Trajectory**

| | $t=0$ | $t=1$ | $t=2$ | $t=3$ | $t=4$ | $t=5$ | $t=6$ |
|---|---|---|---|---|---|---|---|
| Agent 1 | $z_0^1$ | $z_0^1$ | $z_0^1$ | $z_0^1$ | $z_1^1$ | $z_1^1$ | $z_2^1$ |
| | $m_0^1$ | $m_0^1$ | $m_0^1$ | $m_0^1$ | $m_1^1$ | $m_1^1$ | $m_2^1$ |
| Agent 2 | $z_0^2$ | $z_1^2$ | $z_1^2$ | $z_1^2$ | $z_1^2$ | $z_1^2$ | $z_2^2$ |
| | $m_0^2$ | $m_1^2$ | $m_1^2$ | $m_1^2$ | $m_1^2$ | $m_1^2$ | $m_2^2$ |
| Agent 3 | $z_0^3$ | $z_0^3$ | $z_0^3$ | $z_0^3$ | $z_0^3$ | $z_1^3$ | $z_1^3$ |
| | $m_0^3$ | $m_0^3$ | $m_0^3$ | $m_0^3$ | $m_0^3$ | $m_1^3$ | $m_1^3$ |

**Mac-CERTs** (110)

| $t=0$ | $t=4$ | $t=6$ |
|---|---|---|
| $z_0^1$ | $z_1^1$ | $z_2^1$ |
| $m_0^1$ | $m_1^1$ | $m_2^1$ |

| $t=0$ | $t=1$ | $t=6$ |
|---|---|---|
| $z_0^2$ | $z_1^2$ | $z_2^2$ |
| $m_0^2$ | $m_1^2$ | $m_2^2$ |

| $t=0$ | $t=5$ |
|---|---|
| $z_0^3$ | $z_1^3$ |
| $m_0^3$ | $m_1^3$ |

**Mac-JERTs** (120)

| $t=0$ | $t=1$ | $t=4$ | $t=5$ | $t=6$ |
|---|---|---|---|---|
| $z_0^1$ | $z_0^1$ | $z_1^1$ | $z_1^1$ | $z_2^1$ |
| $m_0^1$ | $m_0^1$ | $m_1^1$ | $m_1^1$ | $m_2^1$ |
| $z_0^2$ | $z_1^2$ | $z_1^2$ | $z_1^2$ | $z_2^2$ |
| $m_0^2$ | $m_1^2$ | $m_1^2$ | $m_1^2$ | $m_2^2$ |
| $z_0^3$ | $z_0^3$ | $z_0^3$ | $z_1^3$ | $z_1^3$ |
| $m_0^3$ | $m_0^3$ | $m_0^3$ | $m_1^3$ | $m_1^3$ |

Legend:

- Agent 1
- Agent 2
- Agent 3
- Timestep $t$
- Macro-observation $z$
- Macro-action $m$

# FIG. 2

EP 4 617 949 A1

# FIG. 3

# FIG. 4

410

420

430

470 FIRST ACTION

480 SECOND ACTION

490 THIRD ACTION

500 Reward

460 THIRD OBSERVATION

450 SECOND OBSERVATION

440 FIRST OBSERVATION

510

Europäisches
Patentamt
European
Patent Office
Office européen
des brevets

# EUROPEAN SEARCH REPORT

**Application Number**

EP 25 16 2610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG HANCHENG ET AL: "HiMacMic: Hierarchical Multi-Agent Deep Reinforcement Learning with Dynamic Asynchronous Macro Strategy", ADJUNCT PROCEEDINGS OF THE 2023 ACM INTERNATIONAL JOINT CONFERENCE ON PERVASIVE AND UBIQUITOUS COMPUTING & THE 2023 ACM INTERNATIONAL SYMPOSIUM ON WEARABLE COMPUTING, ACMPUB27, NEW YORK, NY, USA, 6 August 2023 (2023-08-06), pages 3239-3248, XP059963677, DOI: 10.1145/3580305.3599379 ISBN: 979-8-4007-0263-1 * the whole document * | 1-15 | INV. G06N3/0442 G06N3/045 G06N3/092 |

-----

|  | TECHNICAL FIELDS SEARCHED (IPC) |
|---|---|
|  | G06N |

The present search report has been drawn up for all claims

| Place of search | Date of completion of the search | Examiner |
|---|---|---|
| The Hague | 1 July 2025 | Ntarlagiannis, V |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240033850